# EUROPEAN PATENT APPLICATION

(11) **EP 0 634 375 A1**
(43) Date of publication of application: **18.01.1995**
(21) Application number: 94107325.6
(22) Date of filing: 11.05.1994
(51) Int. Cl.: C03C 14/00

(54) **A process for manufacturing a composite material of carbon fibres in a glass matrix and products thereof**

(30) Priority: 16.07.1993 IT TO930533
(71) Applicant: FIAT AUTO S.p.A., I-10135 Torino (IT)
(72) Inventor: Da Re', Mario, I-10100 Torino (IT)
(74) Representative: Di Francesco, Gianni

(57) **Abstract**

A process for manufacturing a composite material of glass matrix carbon fibre, and related products is described. The process consists of the following successive stages:
a) coating, in an inert environment, of a large number of carbon strands with a layer of melted glass;
b) cutting of the coated strands in pieces of the required length;
c) disposition and alignment of the pieces on a work surface;
d) application of a thermal load capable of bringing the glass to its softening temperature thus obtaining a layer of carbon and glass fibre composite material;
e) direct pressure thermoforming of a large number of layers of said composite material thus obtaining an object made of the carbon and glass fibre composite material.

## Description

This invention refers to a process for manufacturing a carbon fibre composite material, and related products;

In the search for materials with a high modulus of elasticity and reduced weight, the manufacturing of composite materials made of carbon fibres impregnated with glass is being studied, as is the use of carbon fibre impregnated with thermosetting resin such as epoxy resin.

Recently there have been various attempts at obtaining a mixed fabric of carbon fibre and glass by heating the carbon fibre and glass to the glass softening temperature followed by direct compression molding after a light composite material with a high modulus of elasticity has been obtained.

These attempts have failed due to the fact that, at the glass softening temperature the carbon fibres burn in the presence of oxygen.

One solution to this problem is to soak the carbon fibres in melted glass in order to form a glass coating around the carbon fibre before carrying out the molding operation; even in this case, however, carbon oxidation, at the temperature of the melted glass used to cover the carbon fibres, has to be avoided.

The aim of this invention is to manufacture a material of the above mentioned type by avoiding the exposure of the carbon fibres to high temperatures in the presence of oxygen.

Another aim of this invention is to propose a process for the manufacturing said composite material paying particular attention to the coating of the fibres with glass before joining them to a glass matrix by molding.

To achieve these and other aims, which will become clear from the following description, this invention proposes a process for the manufacturing of a carbon fibre glass matrix composite material, characterized in that it consists of the following successive stages:
a) coating, in an inert environment, of a large number of carbon strands with a layer of melted glass;
b) cutting of the coated strands in pieces of the required length;
c) disposition and alignment of the pieces on a work surface;
d) application of thermal load of bringing the glass to its softening temperature thus obtaining a layer of carbon and glass fibre composite material;
e) direct pressure thermoforming of a large number of layers of said composite material thus obtaining an object made of the carbon and glass fibre composite material.

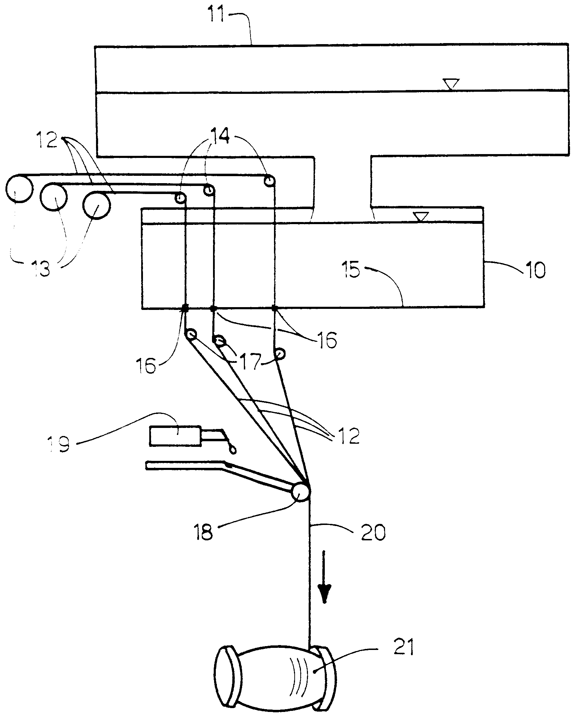

A preferred embodiment of the invention will now be described by way of example only, with reference to the enclosed drawing which shows schematically a device capable of coating carbon strands with a glass coating, thus preparing them for subsequent treatments required by the process.

With reference to the drawing, according to this invention, the work environment within said device has an inert atmosphere totally free from oxygen. Numeral 10 shows a threader containing melted glass which arrives from a furnace (11) into which suitable quantities of glass base components (sand, limestone, kaolin and colemanite) are fed. The melted glass pours from the furnace at a temperature of 1250° C into the upper part of the threader in such a way as to maintain an almost constant level of melted glass in it .

A plurality of carbon strands (12), having, for example, a diameter of 20 microns, is run through the melted glass bath in such a way that a thin continuous layer of glass is deposited around them.

The carbon strands are unwound from feed rollers (13), run over guide rollers (14) placed above the threader, run downwards through the melted glass bath within the threader and exit from the bottom (15) of the threader through holes (16) which have a diameter preferably between 1 and 2 mm.

At this point each strand, coated with a glass coating, has a diameter of about 25 microns. The coated strands then pass over guide rollers (17) and converge onto a roller (18) where they receive , from a suitable dispenser, a continuous water solution of organic compounds with the aim of ensuring the joint disposition of the strands and of protecting them from abrasion.

The glass coated carbon strands (12) are joined together through a twisting operation, thus obtaining a single twisted strand (20), preferably with 20-40 twists /meter. The twisted strand (20) is wound onto a reel (21) which, by rotating at high speed, keeps the strand (20) and the single strands (12) tight, while unwinding them from the rollers (13).

The strand obtained in this way is used to form a material either with or without other glass fibres in order to obtain laths. From these the pieces of the required final length can be obtained and then such pieces are heated to the glass softening temperature (800° C) and afterwards thermoformed by direct compression. The final result is a light composite material of glass and carbon which has a high modulus of elasticity.

As an alternative to the method described above, in order to obtain glass sheets with carbon fibre inclusions which are then placed one on top of the other and thermoformed by direct compression, the following method can be used: a glass solution is prepared which is then distributed on a sub-layer of carbon strands; then the solution is dried and treated so as to obtain a film of glass or of organic/inorganic material. In this way films of various compositions are obtained according to the specific properties required, as, for example, a good chemical resistance, a low glass transition temperature or semi-plastic properties. This method allows a layer of glass to be produced at a work temperature of 100-150°C. Therefore the carbon strand can be treated without being damaged.

In both of the methods described the product which is obtained is a glass protected strand of carbon.

According to this invention, finished products are obtained which, due to their mechanical properties have many applications, for example they can be used to manufacture mechanical moving parts (connecting rods, engine shafts, transmission shafts, etc.) or protection elements (helmets, etc.)

## Claims

1. A process for manufacturing a glass matrix carbon fibre composite material, characterized in that it comprises the following successive stages:
a) coating, in an inert environment, of a large number of carbon strands with a layer of melted glass;
b) cutting of the coated strands in pieces of the required length;
c) disposition and alignment of the pieces on a work surface;
d) application of a thermal load capable of bringing the glass to its softening temperature thus obtaining a layer of carbon and glass fibre composite material;
e) direct pressure thermoforming of a large number of layers of said composite material thus obtaining an object made of the carbon and glass fibre composite material.

2. A process according to claim 1, characterized in that during stage (c) the glass coated carbon fibres are combined with a glass matrix.

3. A process according to claim (2), characterized in that said glass matrix is made up of a plurality of glass fibres.

4. A process according to claims 1 and 2, characterized in that the thermal load of stage (d) is also applied to said glass matrix in order to obtain said layer of composite material.

5. A process according to claim 1, characterized in that during said stage (a) the carbon strands (12) are individually soaked in a bath of melted glass, with deposition of a coating or layer of glass on the surface of each strand (12).

6. A process according to claim 5, characterized in that the following stages are added:
- introduction of carbon strands into the surface of the melted glass bath ;
- running of the strands through said bath;
- exit of the strands from the bath through corresponding holes (16) which are obtained in a wall (15) of the tank or threader (10) containing the melted glass bath.

7. A process according to claims 1 and 5, characterized in that the carbon strands, when they have been coated with glass, are caused to converge in order to be twisted together.

8. A glass matrix carbon fibre composite material obtained through the process of the above claims.
